# EUROPEAN PATENT APPLICATION

(11) **EP 2 317 204 A1**
(43) Date of publication of application: **04.05.2011**
(21) Application number: 10153188.7
(22) Date of filing: 10.02.2010
(51) Int. Cl.: F17C 3/10, F17C 13/08

(54) **Hydrogen storage device**

(30) Priority: 26.10.2009 TW 098136096
(71) Applicant: Chung-Hsin Electric and Machinery Manufacturing Corp., Taipei County (TW)
(72) Inventor: Chiang, Cheng-An, 33383, Kwei Shan Township (TW); Lim, Seng-Woon, 33383, Kwei Shan Township (TW); Wu, Chi-Bin, 33383, Kwei Shan Township (TW)
(74) Representative: Viering, Jentschura & Partner

(57) **Abstract**

A hydrogen storage device (20a) includes a first casing (21) and a second casing (22). A hydrogen storage material is disposed in a receiving space (21b) formed inside the first casing (21). The second casing (22) encloses the first casing (21) such that the first and second casings (21, 22) jointly form an outer flow channel structure (23). Furthermore, the first casing (21) has a surface extended inward of the first casing (21) to form a recess (21a). By disposing a baffle (25) inside the recess (21a), a curved inner flow channel structure (24) is formed in the recess (21a) of the first casing (21). With this simple structure, a heat exchange substance can exchange heat with the hydrogen storage material, which is disposed inside the receiving space (21b), via both the outer flow channel structure (23) and the curved inner flow channel structure (24). Therefore, the heat exchange rate can be increased to accelerate the storage and release of hydrogen.

## Description

### Field of the Invention

The present invention relates to a hydrogen storage device and, more particularly, to a hydrogen storage device that works on the principle of heat exchange.

### Background of the Invention

It is well known that fuel cells can convert chemical energy directly into electric energy and then output the electric energy. In other words, fuel cells have very high energy conversion efficiency. In addition, fuel cells can operate on a wide variety of fuel sources such as hydrogen, alcohol, alkane, and other hydrocarbon. When hydrocarbon is used as a fuel, water and carbon dioxide are generated as waste products. Since carbon dioxide emission causes the greenhouse effect, the use of hydrocarbon as the fuel of fuel cells raises environmental concerns. By contrast, when hydrogen is used, it produces only water as its waste product, with the ensuing impact on the environment rendered far more insignificant.

However, as it is difficult to store hydrogen, the hydrogen storage technology has long been an important subject in research and development. Review of the history of hydrogen storage technology development reveals that in the early days, hydrogen must be stored in the gaseous or the liquid state. Later, metals or alloys were then used as hydrogen storage materials. Recently, non-metal materials and organic metals are now also being studied as alternative hydrogen storage materials.

The mechanism of how hydrogen storage materials store hydrogen is explained hereinafter using hydrogen storage alloys as an example. A hydrogen storage alloy is an alloy highly capable of capturing hydrogen. Under certain temperature and pressure conditions, the alloy breaks down hydrogen into atoms and forms with the hydrogen atoms a metal hydride. The process in which a hydrogen storage alloy and hydrogen form a metal hydride is a reversible exothermic reaction. Therefore, if an external energy is applied to the metal hydride, the metal hydride will release the stored hydrogen after absorbing the energy and revert to the original alloy.

Hydrogen storage alloys have high hydrogen storage capacities. The hydrogen storage density per unit volume of hydrogen storage alloys is 1000 times as high as that of gaseous hydrogen under identical temperature and pressure conditions. Moreover, as hydrogen storage alloys are in solid form, it is not necessary to keep them in bulky cylinders typically used for storing high-pressure hydrogen gases or at extremely low temperatures as required in the storage of liquid hydrogen. In practice, hydrogen can be repeatedly and conveniently stored into and released from hydrogen storage alloys by controlling the temperature of the hydrogen storage alloys. With the foregoing advantageous features, hydrogen storage alloys are undoubtedly a simple and ideal means for storing hydrogen. Described below is a conventional hydrogen storage device that employs hydrogen storage alloys.

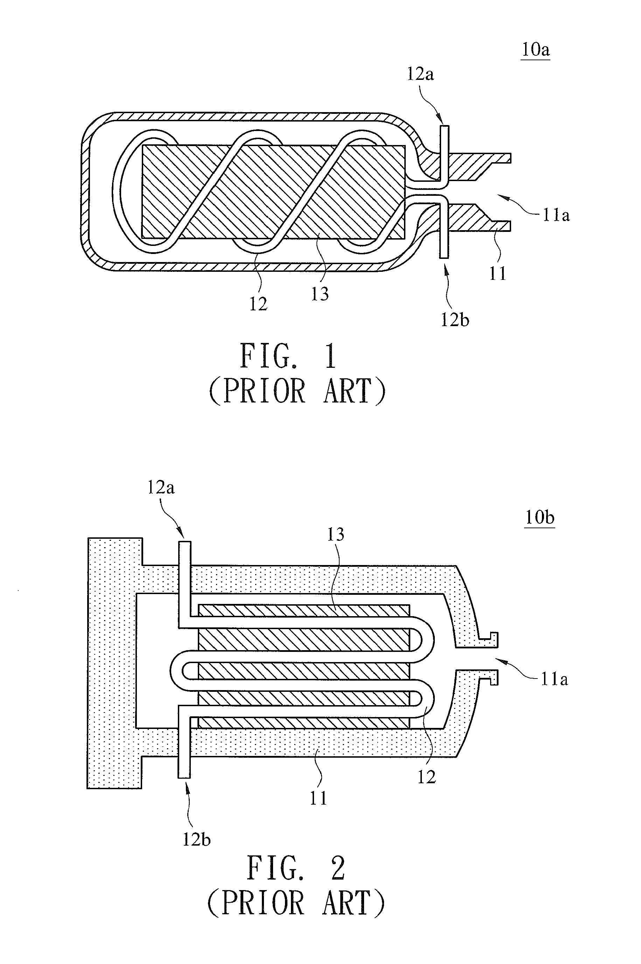

Please refer to Fig. 1 and Fig. 2 for two conventional hydrogen storage devices 10a and 10b having heat exchange functions. Each of the hydrogen storage devices 10a and 10b includes a casing 11 and a flow pipe structure 12. The casing 11 is generally a typical cylinder and has a casing opening 11a. A hydrogen storage alloy 13 is disposed in the casing 11, and hydrogen enters and exits the casing 11 through the casing opening 11a. The flow pipe structure 12, which is provided mainly inside the casing 11, is in contact with the hydrogen storage alloy 13 and has an inlet valve 12a and an outlet valve 12b exposed from the casing 11.

When it is desired to release hydrogen from the hydrogen storage devices 10a and 10b, hot water is pumped into the inlet valve 12a. As a result, the hydrogen storage alloy 13 is heated by the flow pipe structure 12 and releases hydrogen, which is discharged from the casing 11 via the casing opening 11a. When it is desired to store hydrogen into the hydrogen storage devices 10a and 10b, hydrogen is flown into the casing 11 through the casing opening 11a, and cold water pumped into the inlet valve 12a, thus cooling the hydrogen storage alloy 13. In consequence, the hydrogen storage alloy 13 adsorbs the hydrogen.

The flow pipe structure 12 enables the hydrogen storage devices 10a and 10b to exchange heat and thereby store and release hydrogen. Furthermore, the flow pipe structure 12 has a curved configuration which increases the area of contact with the hydrogen storage alloy 13 and thus enhances heat exchange. Nevertheless, the hardship of putting the curved flow pipe structure 12 into the casing 11 makes it difficult to manufacture the hydrogen storage devices 10a and 10b. Furthermore, as the casing 11 is in direct contact with the external environment, the temperature of the hydrogen storage devices 10a and 10b tends to be affected by external temperatures during heat exchange such that the heat exchange rate is compromised. Hence, in view of the foregoing, if a hydrogen storage device with a simple structure and excellent heat exchange capabilities is available, the costs of hydrogen storage can be significantly reduced to the benefit of promoting hydrogen energy.

### Summary of the Invention

It is an objective of the present invention to provide a hydrogen storage device with a heat exchange function, wherein a first casing is enclosed by a second casing such that the first and second casings jointly form an outer flow channel structure. Thus, the hydrogen storage device is simple in structure and yet highly efficient in heat exchange.

It is another objective of the present invention to provide a hydrogen storage device with a heat exchange function, wherein a first casing is extended inward to form a recess, and a baffle is disposed in the recess to form a curved inner flow channel structure. Thus, the hydrogen storage device has a simple and easy-to-manufacture structure in which heat exchange can take place.

To achieve the above and other objectives, the present invention provides a hydrogen storage device including: a first casing; and a second casing enclosing the first casing such that the first and second casings jointly form an outer flow channel structure. Implementation of the present invention at least involves the following inventive steps:
1. With the outer flow channel structure being jointly formed by the first and second casings and completely enclosing the first casing configured for storing hydrogen, the area of contact for conducting heat exchange is enlarged to accelerate heat exchange.
2. With the first casing being extended inward to form the recess, and the baffle being disposed inside the recess to form the curved inner flow channel structure, a heat exchange substance can exchange heat with the content of the first casing without requiring a curved flow pipe structure to be disposed inside the first casing. As a result, the manufacturing process of the hydrogen storage device is simplified and related costs are reduced.

### Brief Description of the Drawings

A detailed description of further features and advantages of the present invention is given below so that a person skilled in the art can understand and implement the technical contents of the present invention and readily comprehend the objectives and advantages thereof by reviewing the disclosure of the present specification and the appended claims in conjunction with the accompanying drawings, in which:
Fig. 1 is a schematic view of a conventional hydrogen storage device;
Fig. 2 is a schematic view of another conventional hydrogen storage device;
Fig. 3 shows a hydrogen storage device according to a first embodiment of the present invention;
Fig. 4 is a longitudinal sectional view taken along line A-A in Fig. 3;
Fig. 5 is a transverse sectional view taken along line B-B in Fig. 3;
Fig. 6 shows a baffle used in the hydrogen storage device according to the first embodiment of the present invention;
Fig. 7 is a sectional view of a hydrogen storage device according to a second embodiment of the present invention; and
Fig. 8 is a sectional view of a hydrogen storage device according to a third embodiment of the present invention.

### Detailed Description of the Invention

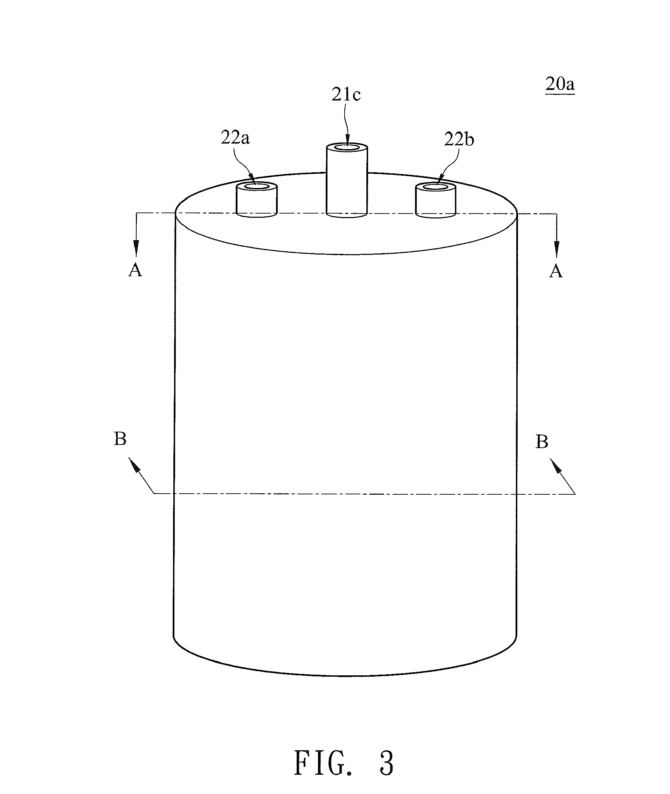

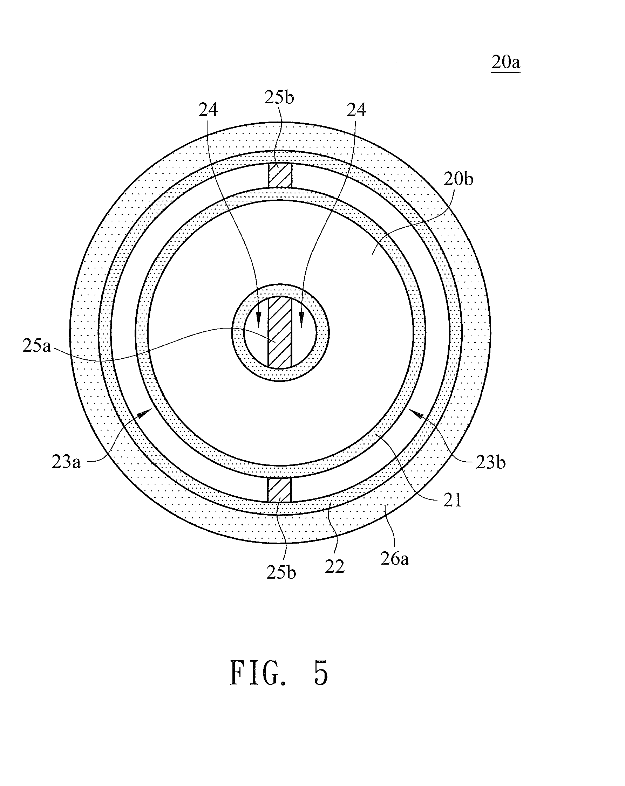

Please refer to FIGS. 3 through 5 for a hydrogen storage device 20a according to a first embodiment of the present invention. The hydrogen storage device 20a includes a first casing 21, a second casing 22, a baffle 25, and a thermal insulation layer 26a.

The first casing 21 has a recess 21a and a receiving space 21b and includes a gas valve 21c. The recess 21a is formed by a surface of the first casing 21 that is extended inward of itself and goes deep into the receiving space 21b. The receiving space 21b is configured for storing a hydrogen storage material. Hydrogen involved in the hydrogen storage process and the hydrogen release process enters and exits the hydrogen storage device 20a through the gas valve 21c, which communicates with the receiving space 21b.

The second casing 22 encloses the first casing 21 such that the first casing 21 and the second casing 22 form an outer flow channel structure 23 therebetween. The second casing 22 is provided with an inlet valve 22a and an outlet valve 22b, both of which are in communication with the outer flow channel structure 23. Thus, a heat exchange substance may enter and exit the outer flow channel structure 23 of the hydrogen storage device 20a via the inlet valve 22a and the outlet valve 22b respectively, so as to conduct heat exchange inside the outer flow channel structure 23. The thermal insulation layer 26a, which is provided outside the second casing 22, prevents the temperature of the heat exchange substance from being affected by external temperatures and also increases the heat exchange rate.

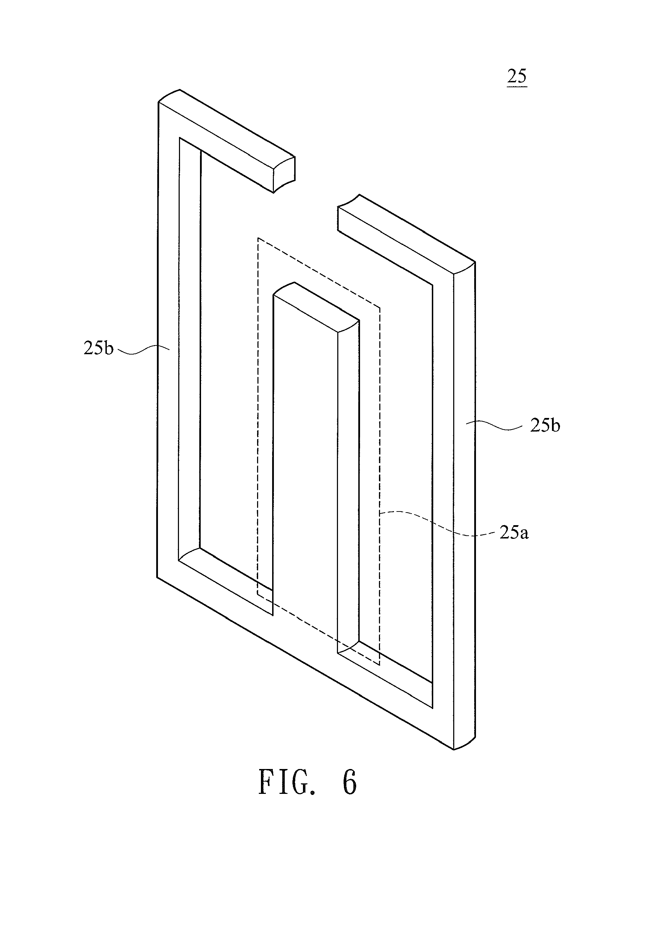

Referring to Fig. 6 for an embodiment of the baffle 25 used in the hydrogen storage device 20a, the baffle 25 has a portion located inside the recess 21a, a portion extending to a surface of the second casing 22, and a portion extending to the space between the first casing 21 and the second casing 22. Hence, the baffle 25 and the first casing 21 jointly form a curved inner flow channel structure 24 inside the recess 21a. The heat exchange substance in the outer flow channel structure 23 is allowed access into the curved inner flow channel structure 24.

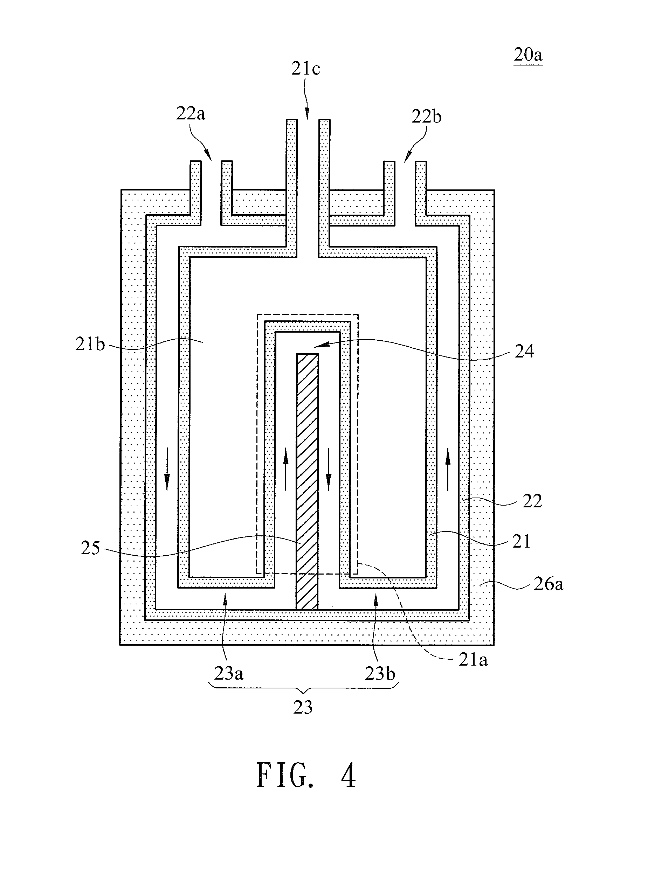

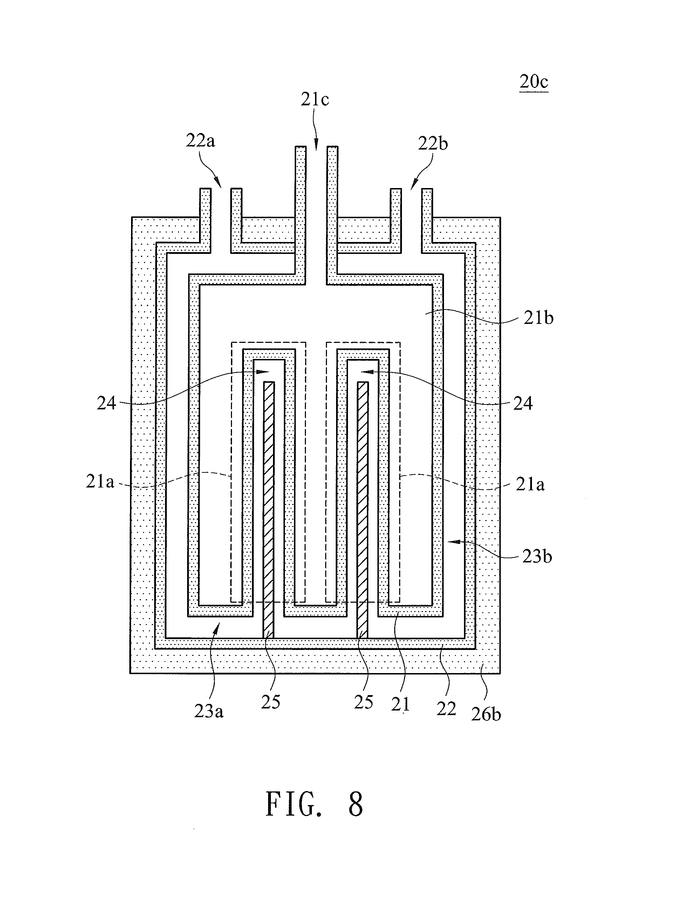

More specifically, the baffle 25 can be divided into a first partition portion 25a and a second partition portion 25b. The first partition portion 25a is located inside the recess 21a of the first casing 21 such that the first partition portion 25a and the first casing 21 form the curved inner flow channel structure 24 in the recess 21a. The second partition portion 25b extends bilaterally from a bottom of the first partition portion 25a and is located between the first casing 21 and the second casing 22. Thus, as shown in Fig. 4, where there is only one baffle 25, the second partition portion 25b divides the outer flow channel structure 23 into at least two outer flow channels 23a and 23b, such as namely a first outer flow channel 23a and a second outer flow channel 23b. (In cases where there are two or more baffles 25, as shown in Fig. 8, the second partition portions 25b of the baffles 25 divide the outer flow channel structure 23 into three or more outer flow channels.) The first outer flow channel 23a communicates the inlet valve 22a with an end of the curved inner flow channel structure 24 while the second outer flow channel 23b communicates the outlet valve 22b with the other end of the curved inner flow channel structure 24.

The aforesaid configuration forms a complete flow path for the heat exchange substance. The heat exchange substance enters the first outer flow channel 23a of the hydrogen storage device 20a though the inlet valve 22a, then flows successively into the curved inner flow channel structure 24 and the second outer flow channel 23b, and finally exits the hydrogen storage device 20a via the outlet valve 22b. As the outer flow channel structure 23 of the hydrogen storage device 20a encloses most of the first casing 21, a larger area is provided for heat exchange, and consequently a higher speed of heat exchange is achieved, as compared with the conventional hydrogen storage devices. Moreover, as the curved inner flow channel structure 24 of the hydrogen storage device 20a is disposed inside the first casing 21, the heat exchange substance can exchange heat with a central portion of the hydrogen storage material. Thus, not only is the speed of heat exchange uniformly and rapidly increased, but also a simple structure is obtained that can be easily produced.

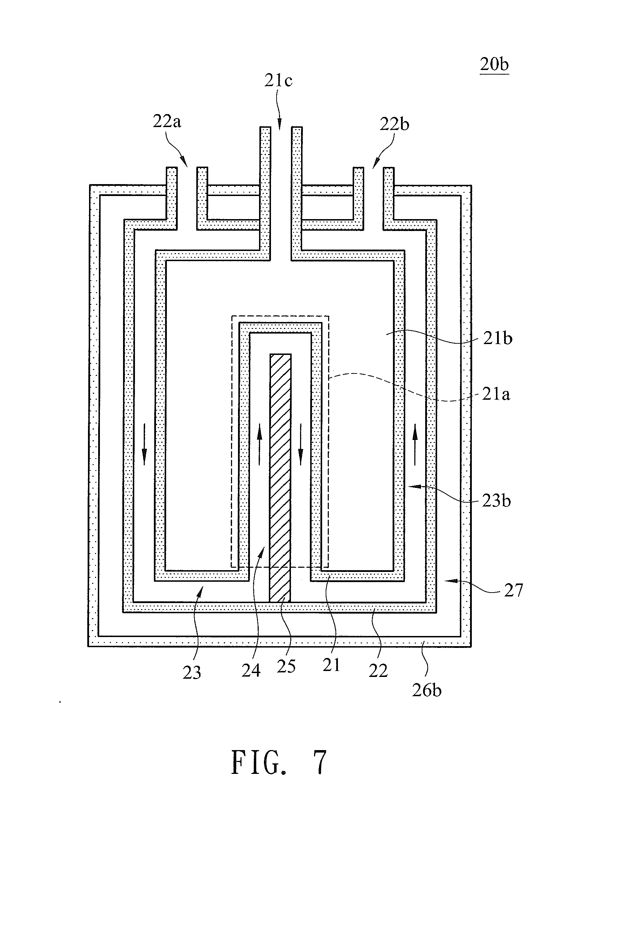

Referring to Fig. 7 for a hydrogen storage device 20b according to a second embodiment of the present invention, the hydrogen storage device 20b includes a thermal insulation casing 26b in lieu of the thermal insulation layer 26a of the hydrogen storage device 20a. The thermal insulation casing 26b encloses the second casing 22 such that the thermal insulation casing 26b and the second casing 22 jointly form a gap 27 therebetween. The gap 27 can be filled with a thermal insulation material or maintained in a vacuum state to further improve thermal insulation of the hydrogen storage device 20b.

A hydrogen storage device 20c according to a third embodiment of the present invention is illustrated in Fig. 8. The hydrogen storage device 20c includes a plurality of baffles 25, and the first casing 21 has a plurality of recesses 21a, wherein each recess 21a is provided therein with a corresponding baffle 25. Thus, a plurality of curved inner flow channel structures 24 are easily formed in the hydrogen storage device 20c, allowing heat exchange to be evenly conducted between the heat exchange substance and the content of the receiving space 21b.

The foregoing embodiments are illustrative of the characteristics of the present invention so as to enable a person skilled in the art to understand the disclosed subject matter and implement the present invention accordingly. The embodiments, however, are not intended to restrict the scope of the present invention. Hence, all equivalent modifications and variations made in the foregoing embodiments without departing from the spirit and principle of the present invention should fall within the scope of the appended claims.

## Claims

1. A hydrogen storage device, comprising:
a first casing (21); and
a second casing (22) enclosing the first casing (21) such that the first casing (21) and the second casing (22) form an outer flow channel structure (23).

2. The hydrogen storage device of Claim 1, further comprising an inlet valve (22a) and an outlet valve (22b) which are provided on the second casing (22) and in communication with the outer flow channel structure (23).

3. The hydrogen storage device of Claim 1, wherein the first casing (21) has at least one recess (21a) extended from a surface of the first casing (21) into itself.

4. The hydrogen storage device of Claim 3, further comprising at least one baffle (25) disposed in said corresponding recess (21a).

5. The hydrogen storage device of Claim 4, wherein each said baffle (25) has a portion extending from inside of said corresponding recess (21a) to a surface of the second casing (22) and forms with the first casing (21) a curved inner flow channel structure (24) inside the corresponding recess (21a).

6. The hydrogen storage device of Claim 5, further comprising an inlet valve (22a) and an outlet valve (22b) which are provided on the second casing (22) and in communication with the outer flow channel structure (23).

7. The hydrogen storage device of Claim 6, wherein each said baffle (25) has a portion extending in the space between the first casing (21) and the second casing (22), thus dividing the outer flow channel structure (23) into at least two outer flow channels (23a, 23b), in which a said outer flow channel (23a) adjacent to the inlet valve (22a) communicates the inlet valve (22a) with an adjacent end of a said curved inner flow channel structure (24), and a said outer flow channel (23b) adjacent to the outlet valve (22b) communicates the outlet valve (22b) with an adjacent end of a said curved inner flow channel structure (24).

8. The hydrogen storage device of Claim 4, further comprising a thermal insulation layer (26a) enclosing the second casing (22).

9. The hydrogen storage device of Claim 4, further comprising a thermal insulation casing (26b) enclosing the second casing (22).

10. The hydrogen storage device of Claim 9, further comprising a thermal insulation material filled between the thermal insulation casing (26b) and the second casing (22).
